# EUROPEAN PATENT APPLICATION

(11) **EP 4 751 928 A1**
(43) Date of publication of application: **03.06.2026**
(21) Application number: 24215954.9
(22) Date of filing: 27.11.2024
(51) Int. Cl.: B60B 33/04, B62D 61/12

(54) **WHEEL MOUNTING AND CARRIAGE THAT INCLUDES IT**

(71) Applicant: De Jong Trucks en Trailers B.V., 4214 KA Vuren (NL); HFK Engineering B.V., 3741 LM Baarn (NL)
(72) Inventor: DE JONG, Cornelis, 4214KA Vuren (NL); KLEIN WOOLTHUIS, Harmen, 3741 LM Baarn (NL)
(74) Representative: Plaggenborg, Menko Bernard

(57) **Abstract**

The invention relates to a wheel mounting (5; 6) for a carriage with a wheel axle (1). The carriage has a longitudinal direction (L) and a transverse direction (D). The wheel axle (1) comprises a support axle (2) extending in the transverse direction (D) with the wheel attachment (5; 6) near at least one end (3; 4) thereof, which at least one wheel mounting (5; 6) comprises a first auxiliary arm (13, 13') and a wheel mounting pivot axis (7) oriented in the transverse direction (D) is provided on a second auxiliary arm (24, 24'). The at least one wheel mounting pivot axis (7) is movable between two positions (9, 10) located apart in the longitudinal direction (L). A first position (9) is located in the longitudinal direction in front of the second position (10). The first auxiliary arm (13, 13') comprises a locking cam (29) which can be moved between a locking and unlocking position for positionally locking the second auxiliary arm (24, 24') in the locking position and positionally unlocking the second auxiliary arm (24, 24') in the unlocking position.

## Description

The present invention relates to a wheel mounting according to the preamble of claim 1. The invention also relates to a carriage that contains such a wheel mounting.

Such a wheel mounting is known in the art. For example, it is used in trailers and semi-trailers of trucks.

Such a wheel mounting offers advantages in particular when maneuvering the carriage backwards. Because the wheel axle in question is in a neutral position or in trailing when driving forwards, which offers advantages when driving forwards, such a position is particularly disadvantageous when driving backwards due to the deterioration in steering behavior. This applies in particular to a steerable wheel axle, as is often the case with trailers and semi-trailers on the, or on one of the, rear wheel axles. In order to provide good steerability when driving forwards as well as backwards, it is preferable for such a wheel axle to be in trailing position in both cases. To this end, the wheel axle must be able to move between two positions, which is already applied in the art.

With the known wheel mountings that provide a repositioning of the wheel axle, the problem arises that when maneuvering over bumps or holes in the road surface or, for example, over a kerb, the wheel axle unintentionally moves to the other, unwanted position. Both the car and the suspension and the drive are thereby exposed to forces that can lead to damage.

The invention now aims to provide an improved wheel mounting of the type mentioned in the preamble.

In particular, the invention aims to provide a wheel mounting of the type mentioned in the preamble that makes maneuvering with a trailer or semi-trailer easier and safer.

The invention also aims to provide an improved wheel mounting that can be implemented cheaply on existing carriages.

The invention also aims to provide an improved carriage that comprises such a wheel mounting.

In order to obtain at least one of the aforementioned advantages, the invention provides, according to a first embodiment, a wheel mounting that contains the features of claim 1. This wheel mounting has the advantage that maneuverability is improved.

In addition, the invention has the advantage that the wheel can easily be brought into the desired position by unlocking the locking mechanism, activating the brake of the wheels on the relevant axle and driving the vehicle into the desired position. The axle will then switch or fold over, after which the locking mechanism can be activated. It has also been shown that the wheel mounting according to the invention can provide increased safety and security at low cost and at the same time does not restrict the loading volume of the carriage. Such a synergistic effect is a great advantage.

The invention therefore relates to a wheel mounting (5; 6) for a carriage with a wheel axle (1), which carriage has a longitudinal direction (L) and a transverse direction (D); wherein the wheel mounting (5; 6) is designed for attachment to a chassis of the carriage or is designed for attachment to the wheel axle (1) which comprises a carrying axle (2) extending in the transverse direction (D) with the wheel mounting (5; 6) near at least one end (3; 4) thereof; which at least one wheel attachment (5; 6) comprises a first auxiliary arm (13, 13') and wherein a second auxiliary arm (24, 24') is provided with a wheel mounting pivot axis (7) oriented in the transverse direction (D); whereby the at least one wheel mounting pivot axis (7) is movable relative to the first auxiliary arm (13, 13') between two positions (9, 10) spaced apart in the longitudinal direction (L); characterized in that the first auxiliary arm (13, 13') comprises a locking cam (29) movable between a locking and unlocking position for positionally locking the second auxiliary arm (24, 24') in the locking position and positionally unlocking the second auxiliary arm (24, 24') in the unlocking position relative to the first auxiliary arm.

According to a preferred embodiment, the locking cam has a pivot coupling with the first auxiliary arm to move the locking cam between a locking and unlocking state. This allows the locking cam to be moved to the locking or unlocking position with a simple pivoting movement of the locking cam relative to the first auxiliary arm.

The locking cam can be advantageously connected to an operating arm, which operating arm is operated by an electric, pneumatic or hydraulic actuator. This provides simple control of the locking cam that can easily be implemented in an existing hydraulic or electrical system of a carriage.

The locking cam is is preferably connected to an operating arm, which operating arm is operated by a substantially linearly moving actuator. The distance of movement of the locking cam is therefore easy to determine, which provides simple control.

In particular, it is preferred that the actuator comprises a linear motor.

In order to easily place and hold the locking cam in a locking position, it is preferred that the second auxiliary arm comprises a recess for receiving the locking cam in the locking position. The positioning of the locking cam and the shape of the recess are such that a cooperating locking condition is obtained. An expert is easily able to determine such a positioning.

To obtain a steerable wheel axle the at least one wheel mounting can be rotatable about a substantially vertical axis of rotation. The vertical pivot axis can be fixedly connected to the first auxiliary arm, whereby the second auxiliary arm is rotatable with respect to a fixed point of the first auxiliary arm. A simple construction can be obtained when the vertical pivot axis is at a relatively high position, viewed from a surface on which a carriage with the wheel attachment according to the invention is placed. A relatively low position is closer to the surface than the relatively high position. The wheel axle attachment is at a relatively lower position.

More in particular, in the wheel mounting according to the invention it is preferred that the first auxiliary arm comprises two locking cams for locking the second auxiliary arm in the first position or second position as desired. When driving forwards and backwards, it is ensured that the wheel axle is held in the desired position.

It is especially preferred that the actuator, when in a rest position, is in a position that keeps the locking cam in the locking position. In the event of failure of the operation or the like, the locking cam will in any case not be able to move unintentionally to a further position, which contributes to safety and security.

The second auxiliary arm is connected to the first auxiliary arm by means of a hinge in order to move the second auxiliary arm in the first and second position. In such case it is preferred in the wheel mounting according to the present invention that the second auxiliary arm is connected to the first auxiliary arm by means of a hinge such that it can pivot with respect to the first auxiliary arm and wherein a first position is located on a first side of the hinge and a second position is located on a second side of the hinge in the longitudinal direction. This, especially when the hinge is at a higher position than the wheel axle, results in the wheel axle being in a dead center in both extreme positions, the first position and the second position. The wheel axle must be actively moved from the first to the second position, and vice versa, which, due to the weight of the carriage, can only be achieved actively, for example by operating the brake of the wheel in question and then making a forward or backward movement with the carriage.

The first auxiliary arm is preferably connected to the axle or to a chassis of the vehicle and the wheel mounting pivot then can be provided in a fixed position on the second auxiliary arm.

According to a further aspect within the present invention, it relates to a carriage with a wheel mounting according to the invention, wherein the carriage comprises a support axle or a chassis with an mounting for the wheel mounting.

Preferably, the carriage comprises a steerable wheel mounting with a vertical pivot axis.

It is preferred that a first position is located behind the second position in a direction of movement of the carriage.

The invention will be explained in more detail below with reference to a drawing. The drawing shows in:
Fig. 1 a wheel axle,
Fig. 2 a cross-section of a part of a wheel mounting,
Fig. 3 a side view of a part of a wheel mounting,
Fig. 4 another side view of a wheel mounting,
Fig. 5 another cross-section of a part of a wheel mounting, and
Fig. 6 another side view of a wheel mounting.

In the figures, the same parts are indicated by the same reference numerals. However, not all the parts necessary for a practical implementation of the invention are shown, due to the simplicity of the representation.

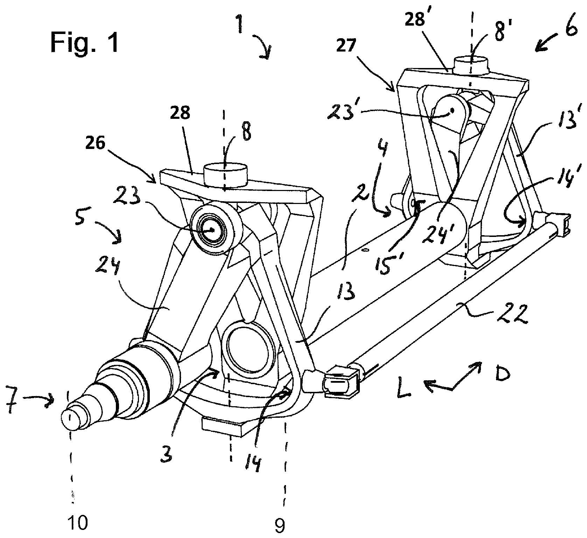

Fig. 1 shows a schematic representation of a structure of a wheel axle 1 comprising a support axle 2 with a wheel mount 5, 6 at both ends 3, 4 thereof. The wheel mounts 5, 6 comprise a first auxiliary arm 13, 13' attached to a construction part 28, 28' of the wheel axle 1. A second auxiliary arm 24, 24', to which a wheel mount pivot 7 is connected, is pivotally arranged 23, 23' on the second auxiliary arm 24, 24'.

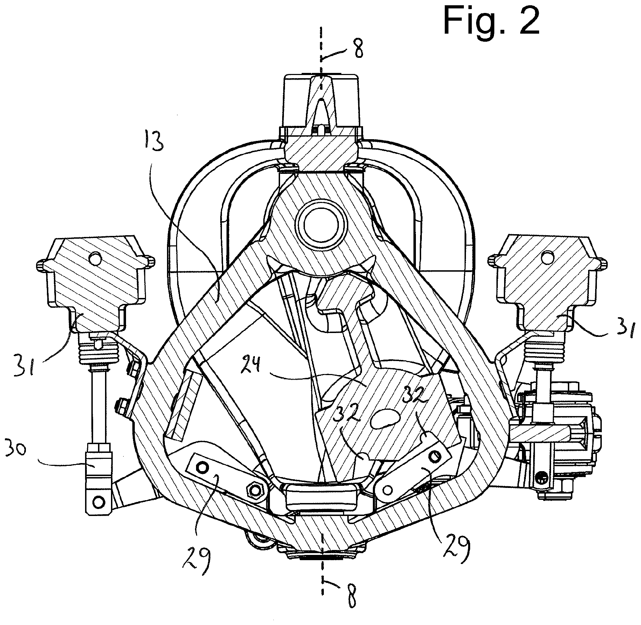

The wheel axle 1 comprises a support axle 2 extending in the transverse direction D and having a wheel mount 5; 6 near at least one end 3; 4 thereof, which at least one wheel mount 5; 6 comprises a first auxiliary arm 13, 13' and whereby a wheel mount pivot 7 directed in the transverse direction D is provided on a second auxiliary arm 24, 24'. The at least one wheel mount pivot 7 is movable relative to the first auxiliary arm 13, 13' between two positions 9, 10 spaced apart in the longitudinal direction L, because the second auxiliary arm is hingedly coupled to the first auxiliary arm 13, 13' by means of a hinge 23, 23'. Here, the second auxiliary arm 24, 24' abuts against stops 14, 14' and 15, 15' of the first auxiliary arm 13, 13', respectively. The first auxiliary arm 13, 13' comprises a locking cam 29 (see Fig. 2) which is movable between a locking and unlocking position for positionally locking the second auxiliary arm 24, 24' in the locking position and positionally unlocking the second auxiliary arm 24, 24' in the unlocking position relative to the first auxiliary arm 13, 13'.

An auxiliary support arm 22 is provided to mutually couple the two first support arms 13, 13' provided at the ends of the wheel axle 1.

In the embodiment shown, the first support arm 13, 13' is attached to construction part 28, 28' so as to be rotatable about a vertical pivot axis 8, 8'. The wheel axle is therefore a steerable wheel axle.

The support axle 2 comprises an extending cylindrical axle body as shown in Fig. 1, with arms 26, 27 directed away from the axle body on which the construction part 28, 28' is located in which the arms 13, 13' (and therefore the entire steering knuckle) are rotatably coupled about a pivot axis 8, 8', respectively. The arms 13, 13' are supported on a bottom side and on a top side in two pivot points around respective pivot points around the vertical pivot axes 8, 8'. The double arms of the steering knuckle and of the arms 26, 27 on which the construction part 28, 28' is located ensure that there is sufficient space for the entire construction while still obtaining a very compact construction.

At a position between the construction part 28, 28' and the first auxiliary arm 13, 13' and between the first auxiliary arm 13, 13' and the second auxiliary arm 24, 24', a locking construction is provided, which comprises a locking cam 29 and operating means therefor. The locking cam 29 is hingedly attached to the first auxiliary arm 13, 13'. Fig. Fig. 2 shows a view of the wheel suspension, with a cross-section through the first and second auxiliary arms 24, 24', showing that the locking cam 29 can move between a position (not shown in Fig. 2) in a recess 32 in the second auxiliary arm 24, 24' to lock the first and second auxiliary arms relative to each other, and a position (shown) outside the recess 32 in the second auxiliary arm 24, 24' to unlock the first and second auxiliary arms relative to each other.

The locking cam 29 is connected to an operating arm 30 which can be controlled by an actuator 31 to move the locking cam 29 between the two positions. In a rest position, the actuator 31 is preferably positioned such that the locking cam 29 is in the locking position.

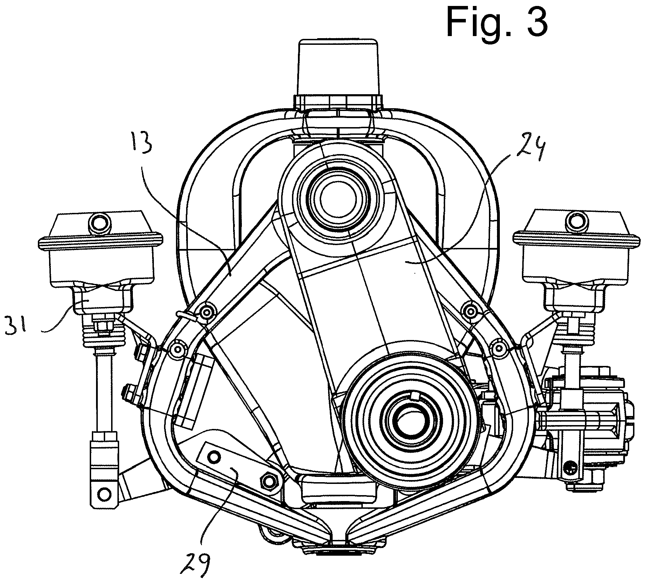

In Fig. 3 a side view is shown of the wheel attachment according to Fig. 2. The lock is located in a protected position between the arms 26, 27 and the second auxiliary arm 24.

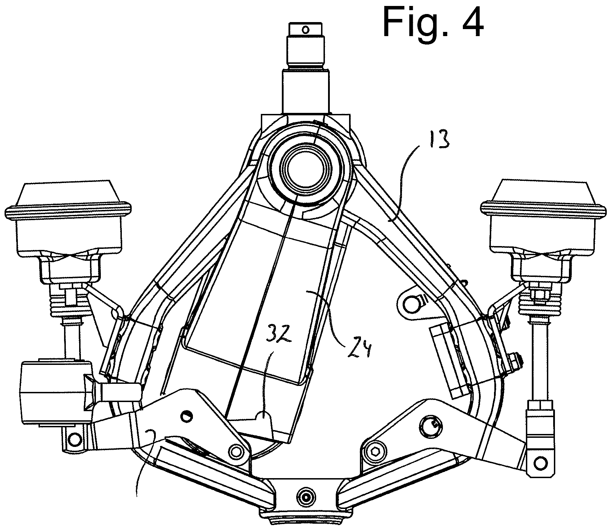

Where the second auxiliary arm 24, 24' was in the first position 9 in Fig. 1-3, in which the carriage is arranged for a forward movement, the second auxiliary arm 24, 24' is in the second position 10 in Fig. 4, in which the carriage is arranged for a backward movement. The locking cam 29 is located here in the recess 32, so that the second auxiliary arm 24, 24' is locked in the second position. The second auxiliary arm 24, 24' here abuts against stop 15, 15'. When the second auxiliary arm 24, 24' is in the first position, it abuts against stop 14, 14'. The stops 14, 14', 15, 15' may, for example, comprise a damping or resilient material to allow smooth movement between the two positions 9, 10 of the second auxiliary arm 24, 24'.

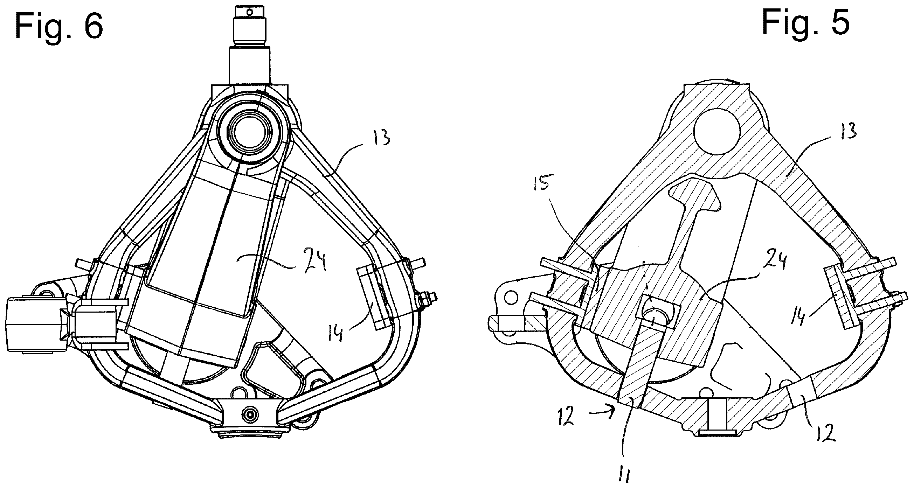

Fig. 5 and 6 schematically show an alternative embodiment of a locking mechanism for locking the second auxiliary arm 24, 24' with respect to the first auxiliary arm 13, 13'. The locking mechanism according to the alternative embodiment in Fig. 5 and 6 comprises a single locking pin 11 in the second auxiliary arm 24, 24', approximately in the middle thereof at the bottom, and can cooperate with one of two recesses 12 provided in the first auxiliary arm 13, 13', whereby the locking cam 11 engages in one of the said recesses 12 in a locking position, and which is located outside each of the recesses in a disengaged position. Therefore, the invention also relates to a wheel attachment 5; 6, wherein the second auxiliary arm 24, 24' comprises a locking cam 11 which can be moved between a locking and unlocking position and the first auxiliary arm 13, 13' comprises a recess for receiving the locking cam 11, for positionally locking the second auxiliary arm 24, 24' in the locking position relative to the first auxiliary arm 13, 13' and positionally unlocking the second auxiliary arm 24, 24' in the unlocking position. In Fig. 5 it is clearly shown that the first auxiliary arm 13, 13' comprises two openings 12 to be able to lock the second auxiliary arm in both the first position 9 and the second position 10, wherein the second auxiliary arm 24, 24' substantially or completely abuts against the respective stops 14, 14'; 15, 15'.

The invention also extends to any combination of measures described above independently of each other.

The invention is not limited to the embodiments described above and shown in the figures. The invention is only limited by the appended claims.

## Claims

1. A wheel mounting (5; 6) for a carriage with a wheel axle (1), which carriage has a longitudinal direction (L) and a transverse direction (D);
wherein the wheel mounting (5; 6) is designed for attachment to a chassis of the carriage or is designed for attachment to the wheel axle (1) which comprises a carrying axle (2) extending in the transverse direction (D) with the wheel mounting (5; 6) near at least one end (3; 4) thereof;
which at least one wheel attachment (5; 6) comprises a first auxiliary arm (13, 13') and wherein a second auxiliary arm (24, 24') is provided with a wheel mounting pivot axis (7) oriented in the transverse direction (D),
whereby the at least one wheel mounting pivot axis (7) is movable relative to the first auxiliary arm (13, 13') between two positions (9, 10) spaced apart in the longitudinal direction (L), **characterized in that** the first auxiliary arm (13, 13') comprises a locking cam (29) movable between a locking and unlocking position for positionally locking the second auxiliary arm (24, 24') in the locking position and positionally unlocking the second auxiliary arm (24, 24') in the unlocking position relative to the first auxiliary arm (13, 13').

2. A wheel mounting (5; 6) according to claim 1, wherein the locking cam (29) has a pivot coupling with the first auxiliary arm (13, 13') to move the locking cam (29) between a locking and unlocking state.

3. A wheel mounting (5; 6) according to claim 1 or 2, wherein the locking cam (29) is connected to an operating arm (30) which is operated by an electric, pneumatic or hydraulic actuator (31).

4. A wheel mounting (5; 6) according to claim 1 or 2, wherein the locking cam (29) is connected to an operating arm (30), which operating arm (30) is operated by a substantially linearly moving actuator (31).

5. A wheel mounting (5; 6) according to claim 4, wherein the actuator (31) comprises a linear motor.

6. A wheel mounting (5; 6) according to claim 1, wherein the second auxiliary arm (24, 24') comprises a recess (32) for receiving the locking cam (29) in the locking position.

7. A wheel mounting (5; 6) according to claim 1, wherein the at least one wheel mounting (5, 6) is rotatable about a substantially vertical axis of rotation (8, 8').

8. A wheel mounting (5; 6) according to claim 1, wherein the first auxiliary arm (13, 13') comprises two locking cams for locking the second auxiliary arm (24, 24') in the first position (9) or second position (10) as desired.

9. A wheel mounting (5; 6) according to claim 1, wherein the second auxiliary arm (24, 24') is connected to the first auxiliary arm (13, 13') by means of a hinge (23, 23') such that it can pivot with respect to the first auxiliary arm (13, 13') and wherein a first position is located on a first side of the hinge (23, 23') and a second position is located on a second side of the hinge (23, 23') in the longitudinal direction.

10. A wheel mounting (5; 6) according to claim 1, wherein the first auxiliary arm (13, 13') is connected to the axle or to a chassis of the vehicle and the wheel mounting pivot (7) is provided in a fixed position on the second auxiliary arm (24, 24').

11. A wheel mounting (5; 6) according to claim 1, wherein the second auxiliary arm (24, 24') comprises a locking cam (11) that can be moved between a locking and unlocking position and the first auxiliary arm (13, 13') comprises a recess for receiving the locking cam (11), for positionally locking the second auxiliary arm (24, 24') in the locking position relative to the first auxiliary arm (13, 13') and positionally unlocking the second auxiliary arm (24, 24') in the unlocking position.

12. A wheel mounting (5; 6) according to claim 11, wherein the first auxiliary arm (13, 13') comprises two recesses (12) spaced apart for receiving the locking cam (11) in the first (9) and second (10) positions, respectively, of the second auxiliary arm (24, 24').

13. A carriage with a wheel mounting (5; 6) according to one of the preceding claims, wherein the carriage comprises a support axle or a chassis with an mounting for the wheel mounting (5; 6).

14. A carriage according to claim 13, comprising a steerable wheel mounting with a vertical pivot axis (8, 8').

15. A carriage according to claim 13 or 14, wherein a first position (9) is located behind the second position (10) in a direction of movement of the carriage.
